# EUROPÄISCHE PATENTSCHRIFT

(11) **EP 0 507 334 B1**
(45) Veröffentlichungstag und Bekanntmachung des Hinweises auf die Patenterteilung: **12.07.1995**
(21) Anmeldenummer: 92105802.0
(22) Anmeldetag: 03.04.1992
(51) Int. Cl.: H02M 3/335

(54) **Schaltnetzteil zur Stromversorgung von elektronischen Geräten**
Switching converter for the supply of current to electronic devices
Circuit pour l'alimentation en courant d'appareils électroniques

(30) Priorität: 04.04.1991 DE 4110923
(43) Veröffentlichungstag der Anmeldung: 07.10.1992
(73) Patentinhaber: VOGT electronic Aktiengesellschaft, D-94128 Obernzell (DE)
(72) Erfinder: Hartmann, Uwe, Verstorben (DE); Mai, Udo, W-8391 Untergriesbach (DE); Thaler, Walter, W-8391 Thyrnau (DE)
(74) Vertreter: Hieke, Kurt

(56) Entgegenhaltungen:
- EP-A- 0 261 894
- DE-A- 3 634 990
- US-A- 3 628 047

## Beschreibung

Die Erfindung bezieht sich auf ein Schaltnetzteil gemäß dem einleitenden Teil des Patentanspruchs 1.

Durch räumlich bedingte Gegebenheiten ist es bekanntlich unmöglich, zwei Wicklungen induktiv 100%ig zu verkoppeln. Dies gilt vor allem dann, wenn die Anordnung der Wicklungen zwecks hoher Isolationsanforderungen oder wegen gesetzlicher Vorschriften mit einem Abstand versehen werden muß, wie dies bei den Übertragern von Schaltnetzteilen in der Regel der Fall ist.

Ohne besondere zusätzliche Maßnahmen würde sich besonders bei Sperrwandler-Schaltnetzteilen die dabei entstehende Streuinduktivität zwischen den Primär- und den netzgetrennten Sekundärwicklungen der Übertrager nachteilig auswirken, da die in ihr gespeicherte Energie beim Abschalten des Schalttransistors zu hohen Spannungsspitzen in dessen Kollektor/Emitterspannung führen würde.

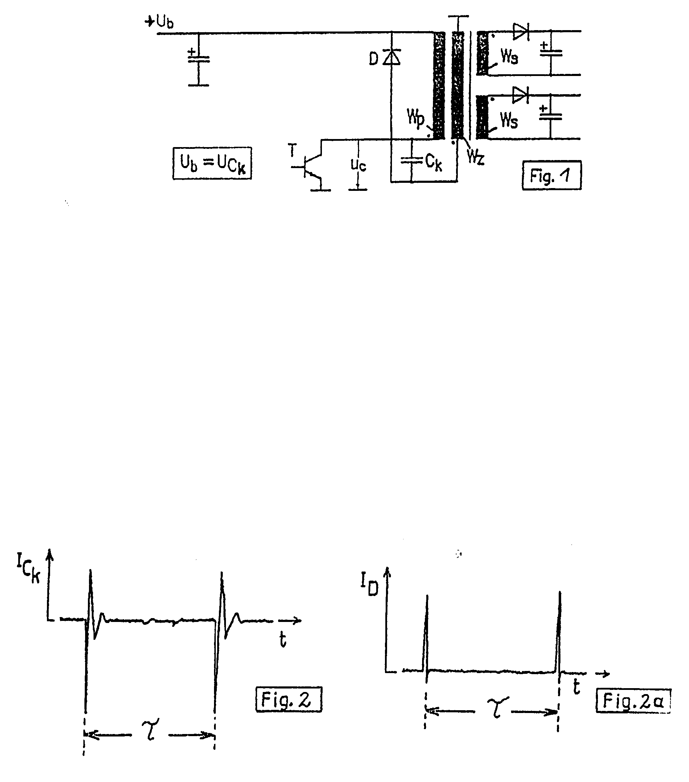

Bei den bekannten Schaltnetzteilen gemäß dem einleitenden Teil des Anspruchs 1 (z.B. bekannt aus DE-A-36 34 990) wird dem Problem des Auftretens hoher Spannungsspitzen dadurch begegnet, daß außer der mit dem Schalttransistor in Serie geschalteten Primärwicklung und der Sekundärwicklungsanordnung für die Energieübertragung, eine zusätzliche Wicklung als Entmagnetisierungswicklung vorgesehen ist, die mit der Primärwicklung induktiv gekoppelt und mit einem Anschluß an Masse sowie mit einem weiteren Anschluß über eine Diode an die Batteriespannung angeschlossen und an einer Stelle, an der sie bezügliche Masse im wesentlichen den gleichen Induktivitätswert aufweist, wie die Primärwicklung, mit dieser über einen Kondensator verbunden ist, der so bemessen ist, daß sich seine Spannung durch die ihm zugeführte im Streufeld des Schaltnetzteilübertragers enthaltene Energie nicht bedeutend ändert. Die Fig. 1 zeigt ein bekanntes Schaltnetzteil gemäß dem einleitenden Teil des Patentanspruchs 1. Fig.2 stellt den zeitlichen Verlauf des Stromes durch den Kondensator bei diesem bekannten Schaltnetzteil dar, und aus Fig.2a ist der zeitliche Verlauf des Stromes durch die Diode D bei dem bekannten Schaltnetzteil ersichtlich, wenn bei diesem die sekundärseitige Stromflußzeit und die Transistorleitzeit gleich lang sind.

Bei dem Schaltnetzteilübertrager des bekannten Schaltnetzteils ist die zusätzliche, mit der Primärwicklung Wₚ gekoppelte Entmagnetisierungswicklung W_{z} an einem Ende an Masse und am anderen Ende über die Diode an die Batteriespannung angeschlossen und über den Kondensator C_{K} mit dem vom Schalttransistor T an Masse durchschaltbaren Ende der Primärwicklung Wₚ verbunden, wobei die Primärwicklung Wₚ und die zusätzliche Wicklung W_{z} zwischen ihren Enden die gleiche Induktivität haben. Das Schaltnetzteil gemäß Fig. 1 ist mit der üblichen Steuer- und Regelschaltung zum Ansteuern des Schalttransistors T versehen, die jedoch in der Zeichnung nicht dargestellt ist, da sie von bekannter Bauart sein kann. Die zusätzliche Wicklung braucht nicht netzgetrennt angeordnet zu werden, so daß sie parallel mit der Primärwicklung gewickelt werden kann. Sie braucht mit der Primärwicklung auch nicht sehr verkoppelt zu sein und muß deshalb auch nicht bifilar mit dieser gewickelt werden. Der Drahtdurchmesser der zusätzlichen Wicklung W_{z} kann klein sein.

Zwischen der jeweiligen Anschlußstelle des Kondensators Cₖ und Batteriespannung U_{b} (bei der Wicklung Wₚ) bzw. Masse (bei der Wicklung W_{z}) müssen die Primärwicklung Wₚ und die zusätzliche Entmagnetisierungswicklung W_{z} gleiche Induktivität aufweisen, damit die Wechselspannungsabfälle dort an den Wicklungen gleich groß sind. Wechselspannungsmäßig liegen beide Wicklungen auf Nullpotential, nämlich die Primärwicklung Wₚ über den Siebkondensator der Batteriespannung + U_{b} und die Entmagnetisierungswicklung W_{z} direkt an Masse. Der zwischen die beiden anderen Wicklungsanschlüsse geschaltete Kondensator Cₖ lädt sich lediglich auf die Batteriegleichspannung auf, während ein nennenswerter Wechselstrom durch ihn nicht fließen kann. Der Koppelkondensator Cₖ ist so bemessen, daß sich seine Spannung durch die ihm zugeführte, im Streufeld enthaltene Energie nicht bedeutend ändert; auch schließt er die Streuinduktivität beider Wicklungen Wₚ und W_{z} kurz. Dadurch verhindert er die unerwünschte Auswirkung der Streuinduktivität auf die Kollektor/Emitter-Spannung des Schalttransistors T. Der Koppelkondensator Cₖ kann auch als Elektrolytkondensator ausgeführt werden. Seine Strombelastung ist, wie aus Fig. 2 ersichtlich, sehr gering; sie hängt von der Kopplung der beiden Wicklungen Wₚ und W_{z} zueinander ab. Auch die Strombelastung der Diode D, die die Wicklung W_{z} in der in der Zeichnung dargestellten Polung mit Batteriespannung + U_{b} verbindet, ist gering, wenn die Transistorleitzeit und die sekundärseitige Stromflußzeit untereinander gleich lang sind, welcher Fall dem Diagramm gemäß Fig. 2a zugrunde liegt. Bei dem Schaltnetzteil gemäß Fig. 1 wird somit jegliche scharfe, große Spannungsspitze, die das etwa Zweifache der zugrunde zu legenden Batteriespannung übersteigt, mit Sicherheit gänzlich vermieden, ohne daß Dämpfungsmittel, die zwangsweise mit einer Verlustleistung verbunden sind, eingesetzt zu werden brauchen.

Damit im Betrieb eines Schaltnetzteils nicht mehr Energie als notwendig auf die Primärseite zurückgeliefert wird, sollte das Tastverhältis für den Schalttransistor so gewählt sein, daß die Einschaltzeit des Transistors der sekundären Stromflußzeit entspricht. In diesem Falle hat die Kollektor/Emitter-Spannung nach dem Abschalten des Schalttransistors T den geringsten erreichbaren Wert, und zwar den doppelten Wert der minimal möglichen Batteriespannung, also der Unterspannung. Dieses optimale Tastverhältnis ist jedoch aus verschiedenen, hier nicht näher erörterten Gründen nicht immer vorgebbar. Ein Beispiel hierfür sind Weitbereichsnetzteile.

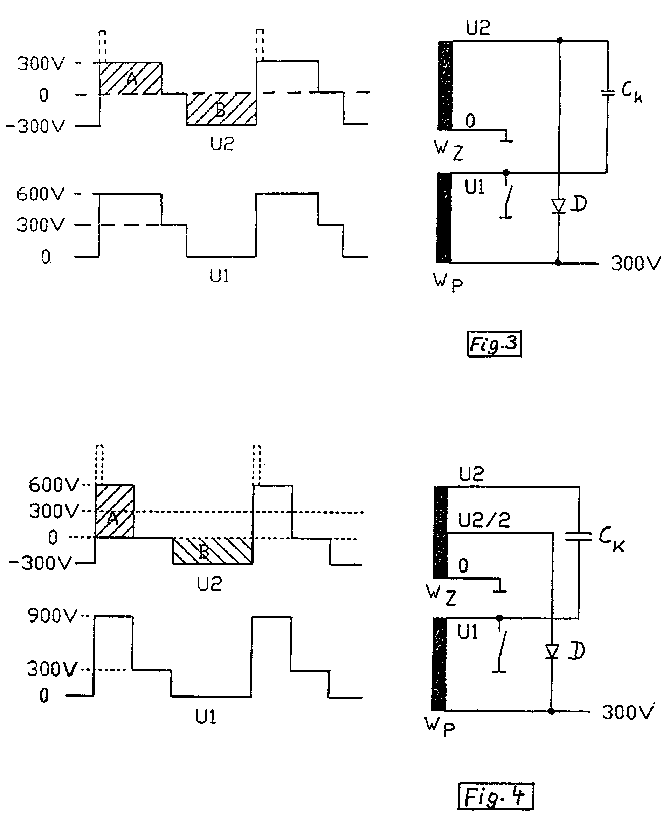

Die gleiche Induktivität bezüglich der Anschlußstellen des Kondensators Cₖ ist bei dem bekannten Schaltnetzteil gemäß Fig. 1 dadurch gewährleistet, daß die Primärwicklung Wₚ und die zusätzliche Entmagnetisierungswicklung W_{z} zwischen ihren Enden gleiche Induktivität haben und der Kondensator Cₖ an die Enden dieser Wicklungen angeschlossen ist. Diese Lösung befriedigt jedoch nur, wenn das vorgenannte, optimale Tastverhältnis erreichbar ist, aus den nachstehend anhand von Fig. 3 erörterten Gründen jedoch nicht, wenn das Tastverhältnis für den Schalttransistor T so gewählt werden muß, daß die Einschaltzeit des Schalttransistors von der sekundären Stromflußzeit verschieden ist.

In Fig. 3 ist schematisch mit einem zugehörigen Schaltbild der Primärseite des Schaltnetzteilübertragers der zeitliche Spannungsverlauf an der Primärwicklung Wₚ und an der zusätzlichen Entmagnetisierungswicklung W_{z} für einen Fall dargestellt, in dem die Transistorleitzeit von der sekundärseitigen Stromflußzeit verschieden, u. zw. hier kürzer als die letztere, ist.

Die Flächen A und B sind zwangsläufig gleich groß. Das Tastverhältnis sei hier so, daß der positive Anteil von U2 doppelt so groß wird wie der negative. Die gesamte Wechselspannungsamplitude von U2 ist so groß wie U1. Darum muß der Kondensator an das obere Ende von W_{z} gelegt werden. Am Kondensator Cₖ steht nur eine Gleichspannung von 300 V an. Ein Wechselstrom kann nicht fließen, da beide Wechselspannungen gleich groß sind.

Im Falle des Tastverhältnisses gemäß Fig. 3 wird die dort in bekannter Weise ebenfalls an das obere Ende von W_{z} angeschlossene Diode D bei Erreichen von 300 V des positiven Anteils leitend und schließt die obere Hälfte des positiven Anteils gegen die Batteriespannung von im Beispiel 300 V kurz. Sie sollte aber nur die gestrichelt gezeichnete Streuinduktivitäts-Spitze kurzschließen bzw. zu Masse ableiten.

Das Kurzschließen eines Teiles des positiven Anteils von U2 führt dazu, daß in den Siebkondensator der Batteriespannung außer dem relativ kleinen Strom aus der Streuinduktivitätsspitze ein weiterer erheblicher Strom zurückgespeist wird, den der Schalttransistor zusätzlich zur sekundärseitigen Bedarfsdeckung und damit überflüssigerweise vorher in den Schaltnetzteilübertrager einspeisen mußte, wodurch auch die Diode einer unerwünschten hohen Strombelastung ausgesetzt wird.

Der Erfindung liegt die Aufgabe zugrunde, ein Schaltnetzteil gemäß dem einleitenden Teil des Patentanspruchs 1 zu schaffen, bei dem in jedem Falle, also auch dann, wenn bei einem gebotenen Tastverhältnis die Transistoreinschaltzeit kürzer oder länger als die sekundärseitige Stromflußzeit ist, gewährleistet ist, daß nur Streuinduktivitäts-Spitzen, nicht aber auch Teile der sonstigen Spannung an der zusätzlichen Entmagnetisierungswicklung zur Batteriespannung kurzgeschlossen werden.

Die vorstehende Aufgabe wird durch die im kennzeichnenden Teil des Patentanspruchs 1 genannten Merkmale gelöst.

Bei dem erfindungsgemäßen Schaltnetzteil ist infolge der kennzeichnenden Merkmale des Patentanspruchs 1 nicht nur das Prinzip verwirklicht, für den zwischen die Primärwicklung und die zusätzliche Entmagnetisierungswicklung geschalteten Kondensator einen Punkt zu wählen, an dem die Wechselspannungen gleiche Größe haben, sondern auch das Prinzip, für die Diode einen Punkt zu wählen, an dem das Dach des positiven Anteils stets den gleichen Wert wie die Batteriespannung hat, so daß auch bei einem Tastverhältnis des Schalttransistors, bei dem dessen Leitzeit von der sekundärseitigen Stromflußzeit verschieden ist, keine zu einer unnötigen zusätzlichen Belastung der Bauteile, insbesondere der Diode und des Schalttransistors, führende Stromrückspeisung in den Siebkondensator der Batteriespannung stattfindet.

Die Unteransprüche betreffen bevorzugte Ausführungsformen des Schaltnetzteils gemäß Patentanspruch 1.

Die Erfindung wird nachstehend anhand der Fig. 4 bis 12 beispielhaft noch näher erläutert.

In der Zeichnung zeigt des weiteren:
- Fig.4: ein Stromflußdiagramm mit Prinzipschaltbild zur Erläuterung der Vorgänge bei unterschiedlicher Transistorleitzeit und sekundärseitiger Stromflußzeit bei einem erfindungsgemäß gestalteten Schaltnetzteil,
- Fig.5: das Prinzipschaltbild einer Ausführungsform eines Schaltnetzteils gemäß der Erfindung für den Fall einer gegenüber der Transistorleitzeit kürzeren sekundärseitigen Stromflußzeit,
- Fig.6: das Prinzipschaltbild einer Ausführungsform eines Schaltnetzteils gemäß der Erfindung für den Fall einer gegenüber der Transistorleitzeit längeren sekundären Stromflußzeit,
- Fig.7: das Prinzipschaltbild einer weiteren Ausführungsform eines Schaltnetzteils gemäß der Erfindung für den Fall einer gegenüber der Transistorleitzeit längeren sekundärseitigen Stromflußzeit,
- Fig.8: das Prinzipschaltbild eines Schaltnetzteils mit mehreren, primärseitig zueinander parallel geschalteten Schaltnetzteilübertragern,
- Fig.9: den zeitlichen Verlauf der Kollektor/Emitter-Spannung des Schalttransistors T bei einem Schaltnetzteil gemäß Fig. 1 und 4 bis 8 bei freischwingendem Betrieb,
- Fig.10: den zeitlichen Verlauf der Kollektor/Emitter-Spannung des Schalttransistors T bei einem Schaltnetzteil gemäß Fig. 1 und 4 bis 8 bei Betrieb mit Festfrequenz,
- Fig.11: das Prinzipschaltbild einer weiteren Ausführungsform eines Schaltnetzteils für Betrieb mit Festfrequenz, und
- Fig.12: de zeitlichen Verlauf der Kollektor/Emitter-Spannung des Schalttransistors T beim Schaltnetzteil gemäß Fig. 11.

Die Fig. 4 zeigt, wie bei dem der Fig. 3 zugrundeliegenden Tastverhältnis und den daraus resultierenden gleichen Spannungen U1 an der Primärwicklung Wp und U2 an der zusätzlichen Wicklung W_{z} der Shaltnetzteilübertrager bei dem erfindungsgemäßen Schaltnetzteil gestaltet ist. Anders als im Falle der Fig. 3 bei dem bekannten Übertrager, ist hier die Diode D bei der zusätzlichen Wicklung W_{z} an eine Anzapfung angeschlossen, an der das Dach des positiven Anteils den Wert der Batteriespannung hat, auf die die Streuinduktivitätsspitze kurzgeschlossen werden soll und die im Beispiel 300 V beträgt. Das Dach des positiven Anteils von U2 am Wicklungsende ist zu 600V angenommen, so daß die Spannung an der Anzapfung die Hälfte hiervon, also U2/2, betragen muß. Der Kondensator Cₖ verbindet auch hier W_{z} und Wₚ endseitig. Die Diode ist damit wie im Falle des bekannten Schaltteils gemäß Fig. 1 bei einem Tastverhältnis mit untereinander gleicher Transistorleitzeit und sekundärseitiger Stromflußzeit, nur mit dem Strom der Streuinduktivitätsspitze belastet, und in den Siebkondensator der Batteriespannung wird außer diesem relativ kleinen Strom kein weiterer Strom zurückgespeist, den der Schalttransistor zusätzlich zur sekundärseitigen Bedarfsdeckung und damit überflüssigerweise vorher in den Schaltnetzteilübertrager einspeisen mußte.

Ist das Tastverhältnis gegenüber dem vorstehenden Beispiel umgedreht, (Transistorleitzeit länger als sekundärseitige Stromflußzeit und damit Spannung des positiven Anteils von U2 kleiner als diejenige des negativen), so wird der Kondensator Cₖ ebenfalls an den Punkt: Induktivität von W_{z} = Induktivität von Wₚ angeschlossen, da aber der positive Anteil von U2 in diesem Falle kleiner als die Batteriespannung (von im Beispiel 300 V) ist, wird die zusätzliche Wicklung W_{z} über die Anschlußstelle des Kondensators Cₖ hinaus so weit verlängert, daß das Dach des positiven Anteils am Ende von W_{z} den Wert 300 V hat und die Diode an dieses Endes angeschlossen, so daß nunmehr der Kondensator an einer Anzapfung von W_{z} liegt.

Die Figuren 5 bis 12 zeigen Ausführungsbeispiele von Schaltnetzteilen, bei denen das vorstehend anhand von Fig. 4 erörterte Prinzip verwirklicht oder, soweit die Darstellung für den Fall untereinander gleicher Transistorleitzeit und sekundärseitiger Stromflußzeit auf einen Schaltnetzteilübertrager mit derselben Anschlußstelle für die Diode D und den Kondensator Cₖ zurückgreift, für anderweitige Tastverhältnisse entsprechend verwirklichbar ist.

Bei dem Schaltnetzteil gemäß Fig. 5 ist der Kondensator C_{K} zwischen die Enden der Primärwicklung W_{P} und der Sekundärwicklung W_{Z} geschaltet, die zwischen ihren Enden gleiche Induktivität haben. Die Diode D ist dagegen anders als bei dem Schaltnetzteil gemäß Fig. 1 an eine Anzapfung der zusätzlichen Entmagnetisierungswicklung W_{z} geschaltet, so daß die Induktivität zwischen dem Diodenanschlußpunkt und Masse kleiner ist als diejenige der Primärwicklung Wₚ. Das Schaltnetzteil gemäß Fig. 5 ist für den Fig. 4 zugrundeliegenden Fall des Tastverhältnisses vorgesehen, und die Diode D kommt hier wegen des Anschlusses an eine Anzapfung der Entmagnetisierungswicklung W_{z} erst in den leitenden Zustand, wenn der positive Anteil von U2 seine volle Höhe erreicht hat. Wenn der positive Anteil, wie in Fig 4, doppelt so groß ist wie der negative Anteil von U2 wäre die Diode D dort an die zusätzliche Entmagnetisierungswicklung W_{z} anzuschließen, wo diese den halben Wert ihres Gesamtwertes aufweist.

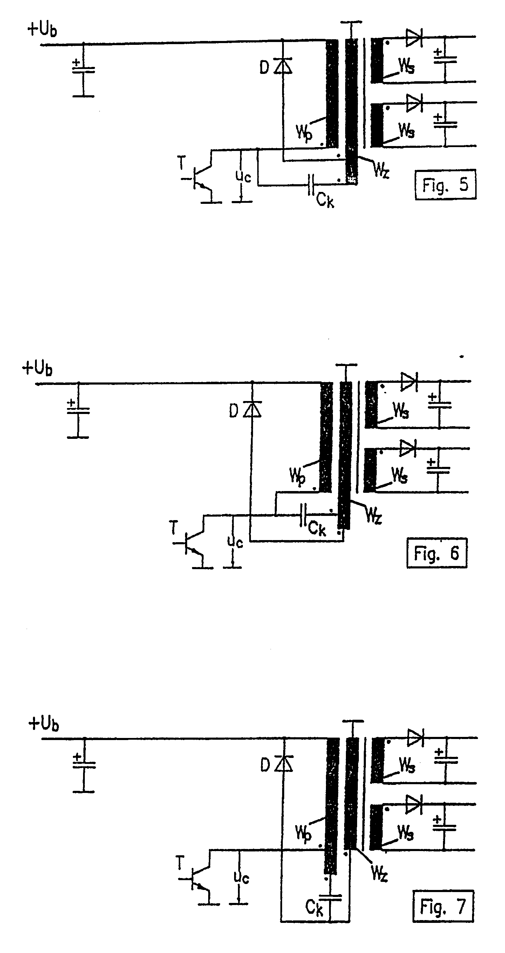

Das Schaltnetzteil gemäß Fig. 6 ist für ein gegenüber Fig. 4 umgedrehtes Tastverhältnis vorgesehen, bei dem der positive Anteil von U2 kleiner ist als der negative. Auch hier ist der Kondensator C_{K} wieder jeweils an einer Stelle der Primärwicklung Wₚ bzw. der Entmagnetisierungswicklung W_{z} angeschlossen, wo diese gleichen Wert haben. Die Diode ist jedoch mit der Zusatzwicklung an einer Stelle verbunden, an der diese eine größere Induktivität aufweist als der Anschlußpunkt des Kondensators Cₖ. Auch in diesem Falle wird die Diode D nur zum Ableiten der Streuinduktivitäts-Spitze, und zwar der vollen, leitend.

Die Fig. 7 zeigt eine Anordnung, bei der der Schalttransistor T an eine Anzapfung der Primärwicklung Wₚ angeschlossen ist. Eine solche Schaltung ermöglicht es, daß die Kollektor/Emitter-Spannung U_{C} des Schalttransistors T nach Abschalten des Stromes Werte annimmt, die mit Sicherheit nicht nur nicht über +2 x U_{b}, sondern darunter liegen. Im übrigen sind die Verhältnisse und der Einsatzzweck die gleichen, wie beim Schaltnetzteil gemäß Fig.6.

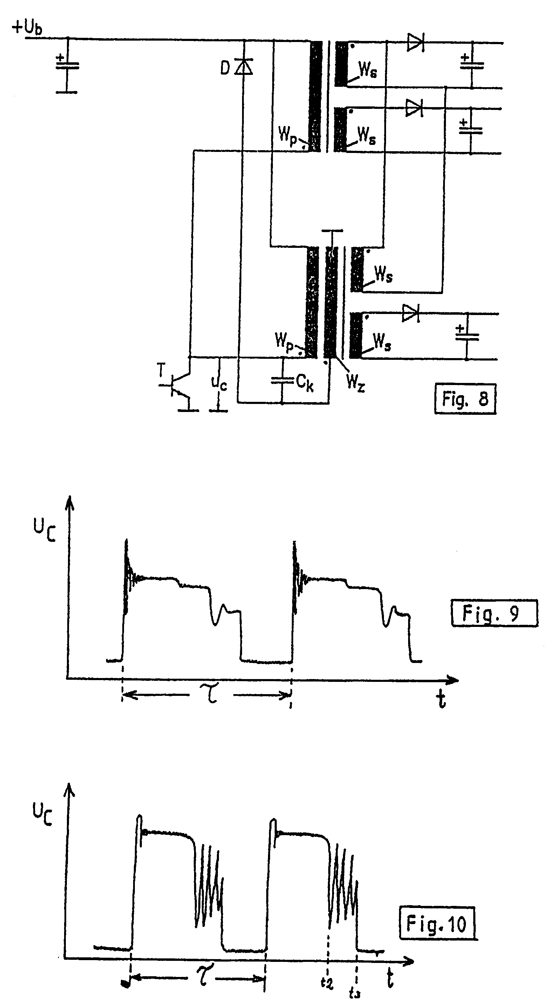

Fig. 8 zeigt eine Ausführung eines Schaltnetzteils gemäß der Erfindung, die für große Leistung vorgesehen ist. Dieses Schaltnetzteil weist zwei Übertrager auf, die primärseitig zueinander parallel geschaltet sind und durch den Schalttransistor T gemeinsam getaktet werden. Von diesen beiden Übertragern ist nur der untere gemäß der Erfindung ausgeführt. In Fig. 8 ist er so gestaltet wie beim Schaltnetzteil gemäß Fig. 1, doch er könnte selbstverständlich auch wie bei den Schaltnetzteilen gemäß Fig. 5, 6 und 7 ausgeführt sein. Der Koppelkondensator Cₖ bei diesem in Fig. 8 unteren Schaltnetzteilübertrager schließt auch die Streuinduktivität des oberen Schaltnetzteilübertragers kurz.

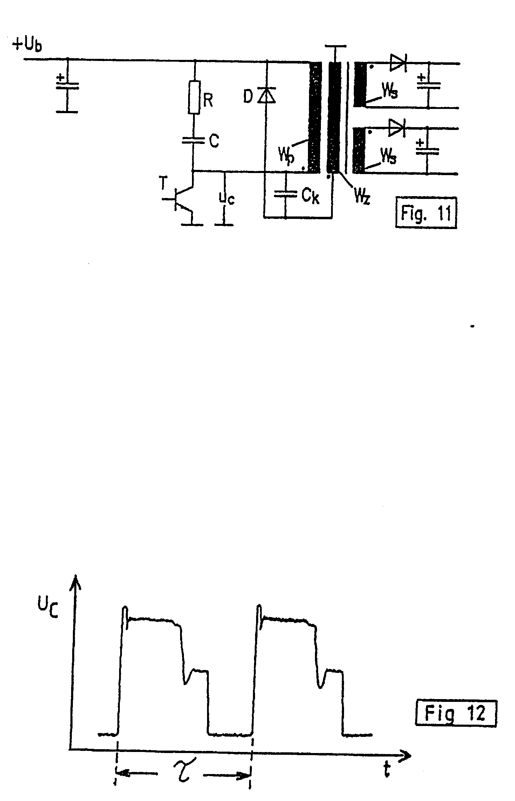

Fig.9 gibt den zeitlichen Verlauf der Kollektor/Emitter-Spannung des Schalttransistors T für freischwingenden Betrieb der Schaltnetzteile gemäß einer der Ausführungen gemäß Fig. 1, 5, 6, 7 und 8 wieder.

Die Fig.10 zeigt den zeitlichen Verlauf der Kollektor/Emitter-Spannung des Schalttransistors T, wenn die vorgenannten Schaltnetzteile mit Festfrequenz betrieben werden. Nach der Abgabe der gespeicherten Energie im Zeitpunkt t₂ schwingt der Übertrager auf seiner Eigenresonanzfrequenz, bis der Schalttranssitor T im Zeitpunkt t₃ eingeschaltet wird. Dieses Verhalten moduliert den Eingangsstrom des Transistors und ist für die eigentliche Netzteilfunktion bedeutungslos. Die maximale Amplitude des Einschaltstroms ist dabei jedoch niemals größer als beim freischwingenden Netzteil.

Sollte die vorgenannte Einschaltstrommodulation, z.B. in Fernsehgeräten oder in Monitoren, jedoch zu Bildstörungen führen, kann die Schwingung leicht und relativ verlustarm durch ein einfaches R-C-Glied beseitigt werden, wie dies in Fig.11 dargestellt ist.

Fig. 12 zeigt den zeitlichen Verlauf der Kollektor/Emitter-Spannung des Schalttransistors T bei der Ausführung des Schaltnetzteils gemäß Fig.11.

Über die Beseitigung der Auswirkung der Streuinduktivität auf die Kollektor/Emitter-Spannung des Schalttransistors T hinaus wird durch die erfindungsgemäße Maßnahme gemäß Patentanspruch 1 auch der Wirkungsgrad des Schaltnetzteils deutlich erhöht. Überdies wird durch die Verringerung der Verlustwärme im Arbeitsbereich der Elektroloytkondensatoren und der Halbleiter (Schalttransistor und Dioden) die Betriebssicherheit insgesamt erhöht. Auch die Streuinduktivität zwischen der Primärwicklung und der Sekundärwicklungsanordnung spielt keine bedeutende Rolle. So können bei der Optimierung von Schaltnetzteilübertragern schwerpunktmäßig andere Kriterien zur Optimierung herangezogen werden, nämlich konstruktiv sicher vorgegebene Netztrennung sowie vollautomatisch und toleranzarm fertigbare Aufbauten.

## Patentansprüche

1. Schaltnetzteil, mit einem primärseitig von einem Schalttransistor (T) in einem Tastverhältnis getaktet zwischen Masse und Batteriespannung (U_{b}) schaltbaren Schaltnetzteilübertrager, der außer der mit dem Schalttransistor (T) in Serie geschalteten Primärwicklung (Wₚ) und der Sekundärwicklungsanordnung (Wₛ) für die Energieübertragung, eine zusätzliche Wicklung (W_{z}) aufweist, die mit der Primärwicklung (Wₚ) induktiv gekoppelt und mit einem Anschluß an Masse sowie mit einem weiteren Anschluß über eine Diode (D) an die Batteriespannung (U_{b}) angeschlossen und an einer Stelle, an der sie bezüglich Masse im wesentlichen den gleichen Induktivitätswert aufweist wie die Primärwicklung (Wₚ), mit dieser über einen Kondensator (Cₖ) verbunden ist, der so bemessen ist, daß sich seine Spannung durch die ihm zugeführte, im Streufeld des Schaltnetzteilübertragers enthaltene Energie nicht bedeutend ändert, **dadurch gekennzeichnet**, daß
a) die Diode (D) und der Kondensator (C_{K}) beide nur dann in bekannter Weise an der gleichen Stelle an die zusätzliche Wicklung (W_{z}) angeschlossen sind, wenn bei dem gewählten Tastverhältnis die Leitzeit des Schalttranssistors (T) gleich ist der Flußzeit des sekundärseitigen Stromes, während
b) die Diode (D) an einer Stelle an die zusätzliche Wicklung (W_{z}) angeschlossen ist, die gegenüber Masse einen kleineren Induktivitätswert aufweist als die Anschlußstelle des Kondensators (Cₖ), wenn bei dem gewählten Tastverhältnis die Leitzeit des Schalttransistors (T) länger ist als die sekundärseitige Stromflußzeit, und
c) die Diode (D) an einer Stelle an die zusätzliche Wicklung (W_{z}) angeschlossen ist, die gegenüber Masse einen größeren Induktivitätswert aufweist als die Anschlußstelle des Kondensators (Cₖ), wenn bei dem gewählten Tastverhältnis die Leitzeit des Schalttransistors (T) kürzer ist als die sekundärseitige Stromflußzeit,
wobei der Induktivitätswert zwischen dem Masseanschluß der zusätzlichen Wicklung (W_{Z}) und dem Anschlußpunkt der Diode D im Falle b) um so viel kleiner und im Falle c) um so viel größer ist als die Induktivität der Primärspule (Wₚ), daß nach dem Abschalten des Schalttransistors (T) die Spannung am Anschlußpunkt der Diode (D) gleich dem Wert der Batteriespannung (+ U_{b}) bei Netzunterspannung ist.

2. Schaltnetzteil nach Anspruch 1, **dadurch gekennzeichnet**, daß im Falle a) der Kondensator (Cₖ) und die Diode (D) beide an das masseferne Ende der zusätzlichen Wicklung (W_{z}) angeschlossen sind.

3. Schaltnetzteil nach Anspruch 1, **dadurch gekennzeichnet**, daß im Falle b) die Diode (D) an eine Anzapfung und der Kondensator (Cₖ) an das masseferne Ende der zusätzlichen Wicklung (W_{z}) angeschlossen sind (Fig.5).

4. Schaltnetzteil nach Anspruch 1, **dadurch gekennzeichnet**, daß im Falle c) die Diode (D) an das masseferne Ende und der Kondensator (Cₖ) an eine Anzapfung der zusätzlichen Wicklung (W_{z}) angeschlossen sind (Fig. 6 u.7).

5. Schaltnetzteil nach einem der vorhergehenden Ansprüche **dadurch gekennzeichnet**, daß der Kondensator (Cₖ) ein Elektrolytkondensator ist.

6. Schaltnetzteil nach einem der vorhergehenden Ansprüche, **dadurch gekennzeichnet**, daß der Schalttransistor (T) an das Ende der Primärwicklung (Wₚ) angeschlossen ist (Fig.3).

7. Schaltnetzteil nach einem der Ansprüche 1 bis 5, **dadurch gekennzeichnet**, daß der Schalttransistor (T) an eine Anzapfung der Primärwicklung (Wₚ) angeschlossen ist (Fig.7).

8. Schaltnetzteil mit mehreren Schaltnetzteilübertragern, die primärseitig zueinander parallel geschaltet und durch einen Schalttransistor (T) getaktet zwischen Masse und Batteriespannung (U_{b}) schaltbar sind, **dadurch gekennzeichnet**, daß nur einer der Schaltnetzteilübertrager gemäß einem der vorhergehenden Ansprüche ausgeführt und beschaltet ist.

## Claims

1. Switching mains unit with a switching mains unit transformer, which is switchable at the primary side between ground and battery voltage (U_{b}) by a switching transistor (T) keyed in a keying ratio and which - apart from the primary winding (Wₚ) connected in series with the switching transistor (T) and the secondary winding (Wₛ) for the energy transmission - comprises an additional winding (W_{z}), which is inductively coupled with the primary winding (Wₚ) and connected by one terminal to ground as well as by another terminal by way of a diode (D) to the battery voltage (U_{b}) and - at a point at which it displays substantially the same value of inductance to ground as the primary winding (Wₚ) - is connected therewith by way of a capacitor (Cₖ), which is so dimensioned that its voltage does not vary significantly due to the energy which is contained in the stray field of the switching mains unit transformer and fed to it, characterised thereby, that
a) the diode (D) and the capacitor (Cₖ) are both connected to the additional winding (W_{z}) at the same point in known manner only when the conductive time of the switching transistor (T) at the chosen keying ratio is equal to the time of flow of the secondary current, whilst
b) the diode (D) is connected to the additional winding (W_{z}) at a point which displays a lower value of inductance to ground than the connecting point of the capacitor (Cₖ) when the conductive time of the switching transistor (T) at the chosen keying ratio is longer than the time of flow of the secondary current and
c) the diode (D) is connected to the additional winding (W_{z}) at a point which displays a higher value of inductance to ground than the connecting point of the capacitor (Cₖ) when the conductive time of the switching transistor (T) at the chosen keying ratio is shorter than the time of flow of the secondary current,
wherein the value of inductance between the ground connection of the additional winding (W_{z}) and the point of connection of the diode (D) in the case (b) is as much smaller and in the case (c) as much greater as the inductance of the primary winding (Wₚ) and that the voltage at the point of connection of the diode (D) after the switching-off of the switching transistor (T) is equal to the battery voltage (+U_{b}) in the case of undervoltage of the mains.

2. Switching mains unit according to claim 1, characterised thereby, that the capacitor (Cₖ) and the diode (D) are both connected in the case (a) to that end of the additional winding (W_{z}), which is remote from ground.

3. Switching mains unit according to claim 1, characterised thereby, that in the case (b), the diode (D) is connected to a tap of and the capacitor (Cₖ) to that end of the additional winding (W_{z}), which is remote from ground (Figure 5).

4. Switching mains unit according to claim 1, characterised thereby, that in the case (c) the diode (D) is connected to the end remote from ground and the capacitor (Cₖ) is connected to a tap of the additional winding (W_{z}) (Figures 6 and 7).

5. Switching mains unit according to one of the preceding claims, characterised thereby, that the capacitor (Cₖ) is an electrolytic capacitor.

6. Switching mains unit according to one of the preceding claims, characterised thereby, that the switching transistor (T) is connected to the end of the primary winding (Wₚ) (Figure 3).

7. Switching mains unit according to one of the claims 1 to 5, characterised thereby, that the switching transistor (T) is conencted to a tap of the primary winding (Wₚ) (Figure 7).

8. Switching mains unit with several switching mains unit transformers which are one connected in parallel with the other at the primary side and, keyed by a switching transistor (T), are switchable between ground and battery voltage (U_{b}), characterised thereby, that only one of the switching mains unit transformers is constructed and wired according to one of the preceding claims.

## Revendications

1. Alimentation à découpage comportant un transformateur d'alimentation à découpage, dont le taux d'impulsions est commandé de façon cadencée au primaire par un transistor de commutation (T) et qui peut être branché entre la masse et la tension (U_{b}) d'une batterie et qui comporte, outre l'enroulement primaire (Wₚ) branché en série avec le transistor de commutation (T), et le dispositif d'enroulement secondaire (Wₛ) pour la transmission d'énergie, un enroulement supplémentaire (W_{z}), qui est accouplé de façon inductive à l'enroulement primaire (Wₚ) et est raccordé par une borne à la masse ainsi que par une autre borne, au moyen d'une diode (D), à la tension (U_{b}) de la batterie, et est relié, en un endroit, où il a, par rapport à la masse, sensiblement la même valeur d'inductance que l'enroulement primaire (Wₚ), à cet enroulement par l'intermédiaire d'un condensateur (Cₖ), qui est dimensionné de telle sorte que sa tension ne varie pas de façon significative sous l'effet de l'énergie qui lui est envoyée et qui est contenue dans le champ de fuite du transformateur de l'alimentation à découpage, caractérisé par le fait que
a) la diode (D) et le condensateur (C_{K}) ne sont tous deux raccordés de façon connue, au même endroit, à l'enroulement supplémentaire (W_{z}), que lorsque, pour le taux d'impulsions choisi, la durée de conduction du transistor de commutation (T) est égale à la durée de passage du courant côté secondaire, tandis que
b) la diode (D) est raccordée à l'enroulement supplémentaire (W_{z}) en un point, qui a par rapport à la masse une valeur d'inductance plus petite que le point de raccordement du condensateur (Cₖ), lorsque, pour le taux d'impulsions choisi, la durée de conduction du transistor de commutation (T) est supérieure à la durée de passage du courant côté secondaire, et
c) la diode (D) est raccordée à l'enroulement supplémentaire (W_{z}) en un point qui possède, par rapport à la masse, une valeur d'inductance plus grande que le point de raccordement du condensateur (Cₖ), lorsque, pour le taux d'impulsions choisi, la durée de conduction du transistor de commutation (K) est inférieure à la durée de passage du courant côté secondaire,
la valeur d'inductance entre la borne de masse de l'enroulement supplémentaire (W_{z}) et le point de raccordement de la diode (D) étant d'autant plus petite, dans le cas b), et d'autant plus grande, dans le cas c), que l'inductance de la bobine primaire (Wₚ), qu'après la mise à l'état bloqué du transistor de commutation (T), la tension présente au point de raccordement de la diode (D) est égale à la valeur de la tension (+U_{b}) de la batterie dans le cas d'une sous-tension du réseau.

2. Alimentation à découpage suivant la revendication 1, caractérisé par le fait que dans le cas a), le condensateur (Cₖ) et la diode (D) sont tous deux raccordés à l'extrémité, éloignée de la masse, de l'enroulement supplémentaire (W_{z}).

3. Alimentation à découpage suivant la revendication 1, caractérisé par le fait que dans le cas b), la diode (D) est raccordée à une prise, et le condensateur (Cₖ) est raccordé à l'extrémité, éloignée de la masse, de l'enroulement supplémentaire (W_{z}). (figure 5).

4. Alimentation à découpage suivant la revendication 1, caractérisé par le fait que dans le cas c), la diode (D) est raccordée à l'extrémité éloignée de la masse, et le condensateur (Cₖ) est raccordé à une prise de l'enroulement supplémentaire (W_{z}). (figures 6 et 7).

5. Alimentation à découpage suivant l'une quelconque des revendications précédentes, caractérisé par le fait que le condensateur (Cₖ) est un condensateur électrolytique.

6. Alimentation à découpage suivant l'une des revendications précédentes, caractérisé en ce que le transistor de commutation (T) est raccordé à l'extrémité de l'enroulement primaire (Wₚ). (figure 3).

7. Alimentation à découpage suivant l'une des revendications 1 à 5, caractérisé en ce que le transistor de commutation (T) est raccordé à une prise de l'enroulement primaire (Wₚ). (figure 7).

8. Alimentation à découpage comportant plusieurs transformateurs de l'alimentation à découpage, qui sont branchés en parallèle les uns aux autres côté primaire et peuvent être branchés entre la masse et la tension (U_{b}) d'une batterie, en étant commandé par un transistor de commutation (T), caractérisé par le fait que seul l'un des transformateurs de l'alimentation à découpage est réalisé et câblé suivant l'une des revendications précédentes.
